# EUROPEAN PATENT SPECIFICATION

(11) **EP 4 181 301 B1**
(45) Date of publication and mention of the grant of the patent: **10.06.2026**
(21) Application number: 22804849.2
(22) Date of filing: 20.04.2022
(51) Int. Cl.: H01M 50/358, H01M 50/30, H01M 50/375, H01M 50/24, H01M 10/6566, H01M 10/625, H01M 50/211, H01M 50/342, H01M 50/367, H01M 50/209

(54) **BATTERY PACK HAVING GAS VENTING PATH**
BATTERIEPACK MIT ENTGASUNGSPFAD
BLOC-BATTERIE AYANT UN TRAJET D'ÉVACUATION DE GAZ

(30) Priority: 17.05.2021 KR 20210063730
(43) Date of publication of application: 17.05.2023
(73) Proprietor: LG Energy Solution, Ltd., Seoul 07335 (KR)
(72) Inventor: SHIN, Ju-Hwan, Daejeon 34122 (KR); KIM, Dong-Hyun, Daejeon 34122 (KR); KIM, Tae-Geun, Daejeon 34122 (KR); YIM, Sang-Wook, Daejeon 34122 (KR); LEE, Hyoung-Suk, Daejeon 34122 (KR)
(74) Representative: Goddar, Heinz J.
(86) International application number: PCT/KR2022/005660
(87) International publication number: WO 2022/244994

(56) References cited:
- EP-A1- 2 506 336
- EP-A1- 3 799 150
- WO-A1-2021/091058
- CN-A- 110 190 211
- CN-A- 110 364 644
- CN-A- 112 086 605
- CN-A- 112 531 246
- JP-B2- 5 939 307
- US-A1- 2005 170 238
- US-A1- 2019 157 636
- US-A1- 2020 152 941

## Description

### TECHNICAL FIELD

The present disclosure relates to a battery pack, and more particularly, to a battery pack having a gas venting path for allowing gas generated inside a battery module to flow out of a pack case safely and efficiently.

### BACKGROUND ART

Secondary batteries are attracting the attention as a new eco-friendly and energy efficient source of energy for their advantages such as remarkably reducing the use of fossil fuels and not generating by-products from the use of energy.

Accordingly, secondary batteries are increasingly used in a wide range of device applications. For example, secondary batteries are widely used as not only an energy source of multifunctional small products such as wireless mobile device or wearable device, but also an energy source of electric vehicles and hybrid electric vehicles suggested as an alternative to gasoline vehicles and diesel vehicles or energy storage systems (ESSs).

Lithium secondary batteries widely used in recent years have the operating voltage of about 2.5V to 4.5V for an individual lithium secondary battery. Accordingly, electric vehicles or energy storage systems requiring high capacity and high output use battery packs as their energy source, and the battery pack includes battery modules connected in series and/or in parallel, each battery module including lithium secondary batteries connected in series and/or in parallel.

Depending on the output or capacity of the battery pack required for electric vehicles, the number of lithium secondary batteries in the battery module may increase or the number of battery modules in the battery pack may increase.

However, when the battery pack includes a large number of lithium secondary batteries, grave damage occurs in the event of fires and explosion.

For example, when an event occurs in any battery module such as a short between lithium secondary batteries or an abnormal temperature rise, a large amount of venting gas may be generated from the lithium secondary batteries, and when degradation is aggravated, in addition to the venting gas, high temperature spark including an electrode active material and aluminum particles may flare up. In this instance, the venting gas and the high temperature spark causes thermal damage to the adjacent battery module, and there is a very high risk that an additional event may occur to the other battery modules.

Accordingly, when venting gas and high temperature spark occurs in any battery module, there is a need for the development of a gas venting path for allowing venting gas to flow out of a battery pack quickly and safely while minimizing the influence on other battery modules.

US 2020/152 941 A1 describes systems and methods for venting battery cells in a battery cell pack assembly. An assembly includes a matrix configured to hold battery cells and channel assemblies that each include a venting channel for venting materials (e.g., flammable gas and conductive particulates) from the interior of the matrix to an outlet. Battery cells, particularly lithium ion battery cells, have a chance of entering a thermal runaway condition that causes the production of flammable gas. The assembly is configured such that battery cells are allowed to vent such flammable gas out of the assembly. A ventilation opening and channel in the assembly cause venting materials to be routed through and out of the assembly.

CN 110 364 644 A provides a battery pack for guiding the discharge of a thermal runaway gas and a new energy automobile so as to achieve an effect of timely discharging the thermal runaway gas sprayed out by a lithium battery during the thermal runaway period. The battery pack for guiding the discharge of the thermal runaway gas comprises a lower box body and a plurality of battery modules installed in the lower box body, wherein the lower box body is provided with a gas flow channel communicated with the atmosphere; each battery module includes a shell and a plurality of single batteries installed in the shell, each shell is provided with a module gas flow channel communicated with the gas flow channel and single battery gas flow channels arranged corresponding to the single batteries, and the plurality of single battery gas flow channels in each shell are communicated with the module gas flow channel; and the thermal runaway gas sprayed out by each single battery during the thermal runaway period is discharged to the atmosphere sequentially through the corresponding single battery gas flow channel, the module gas flow channel and the gas flow channel.

EP 3 799 150 A1 discloses a battery box, which includes: a box body including an accommodation space; and a first battery group accommodated in the accommodation space, where the first battery group includes: a first battery row, where the first battery row includes a plurality of batteries, an explosion-proof valve is disposed on the top of each battery, and all explosion-proof valves of the first battery row form a first explosion-proof valve row; a first guide plate, configured to be sealed and disposed above the first explosion-proof valve row, where the first guide plate and an upper surface of the first battery row form a first path; and a first end plate, disposed on one side of the first battery row and provided with a first recess, where the first recess is located below the first guide plate and communicates with one end of the first path, and an opening is disposed at a position, corresponding to the first recess, of the box body, where the battery box further includes: a sealing member, configured to seal an opening corresponding to the box body and be capable of being damaged to open the opening.

### DISCLOSURE

### Technical Problem

The present disclosure is designed to solve the above-described problem, and therefore the present disclosure is directed to providing a battery pack having a gas venting path for allowing venting gas to flow out of a pack case quickly and safely while minimizing the influence on other battery modules when venting gas or spark is generated inside any battery module.

### Technical Solution

The invention is defined in the appended claims. According to the present disclosure, there is provided a battery pack including a plurality of battery modules, each including battery cells, a module housing accommodating the battery cells and a gas venting channel in communication with an inside of the module housing; and a pack case accommodating the plurality of battery modules, and having a gas movement passage within a pack frame which forms a wall, wherein the gas venting channel of each battery module is in communication with the gas movement passage, wherein the gas venting channel includes a duct with a hollow structure, a gas inlet provided on one side of the duct, and a gas outlet provided on the other side of the duct at a predetermined distance apart from the gas inlet in an extension direction of the duct, wherein the gas inlet matches a first opening provided in the module housing, and the gas outlet matches a suction port provided in the pack frame, wherein the gas outlet includes a first gas outlet in a left edge area of the duct and a second gas outlet in a right edge area of the duct, wherein the battery cells include first group battery cells and second group battery cells with a firewall interposed between, wherein the firewall divides an inner space of the module housing, wherein the first opening includes an opening on a left top side of the module housing and an opening on a right top side of the module housing with respect to the firewall, wherein the gas inlet includes a first gas inlet which matches the opening and a second gas inlet which matches the opening, and wherein a barrier is provided between the first gas inlet and the second gas inlet.

The duct may include a plurality of partitions to divide an inner space of the duct.

The duct may include a plurality of narrow passages extended in a lengthwise direction between the plurality of partitions.

The pack frame which forms the wall may include a left side frame which forms a left wall of the pack case and a right side frame which forms a right wall of the pack case.

Each of the left side frame and the right side frame may include a vertical frame part extended in a heightwise direction of the battery module, and a module connection frame part extended in a horizontal direction from the vertical frame part and connected to the gas venting channel.

The gas movement passage may be in the module connection frame part, and one end of the module connection frame part may have an open structure to communicate with outdoor air.

The gas venting channel may be on the module housing, and the module connection frame part may be on the gas venting channel and configured to communicate with the gas venting channel.

The gas venting channel may be on the module housing, and the module connection frame part may be on a side of the gas venting channel and configured to communicate with the gas venting channel.

The first opening may be closed by a cap made of a hot melt material.

The module housing and the gas venting channel may be integrally formed.

### Advantageous Effects

According to an aspect of the present disclosure, it is possible to provide a battery pack having a gas venting path for allowing venting gas to flow out of the pack case quickly and safely while minimizing the influence on other battery modules when venting gas or spark is generated inside any battery module.

Specifically, each battery module has the gas venting channel attached to the exterior or integrally formed, the gas venting channel in communication with the inside of the module, and the pack frame that forms the wall of the pack case has a hollow structure that provides the gas movement passage.

The gas venting channel of each battery module and the pack frame of the pack case are in communication with each other. Accordingly, when gas is generated from each battery module, the gas may be allowed to flow out of the pack case along the gas venting channel and the gas movement passage of the pack frame. In this case, the gas does not spread into the pack case, and thus the adjacent battery module avoids thermal damage caused by the gas.

Additionally, the gas venting channel according to an aspect of the present disclosure includes the duct with a hollow structure, the gas inlet provided on one side of the duct, and the gas outlet provided on the other side of the duct at a predetermined distance apart from the gas inlet, thereby preventing spark or flame from the inside of the battery module from entering the gas venting channel. Accordingly, it is possible to allow gas generated from each battery module to flow out of the pack case while preventing high temperature spark particles or flames from coming out of the pack case.

Additionally, since the present disclosure implements the gas venting path using the pack frame of the pack case, for example, compared to gas venting paths implemented with an addition of a separate component in the inner space of the pack case, it is possible to reduce the number of components and simplify the assembly process and it is more effective in terms of the space utilization.

The effect of the present disclosure is not limited to the above-described effects, and these and other effects will be clearly understood by those skilled in the art from the present disclosure and the accompanying drawings.

### DESCRIPTION OF DRAWINGS

FIG. 1 is a schematic perspective view of a battery pack according to an embodiment of the present disclosure.
FIG. 2 is a partial exploded perspective view of the battery pack of FIG. 1.
FIG. 3 is a conceptual diagram of a gas venting path of the battery pack of FIG. 1.
FIG. 4 is a perspective view of a battery module according to an embodiment of the present disclosure.
FIG. 5 is an exploded perspective view of the main parts of the battery module of FIG. 4.
FIG. 6 is a diagram showing the bottom of the battery module of FIG. 4.
FIG. 7 is a partial cutaway perspective view of a gas venting channel in section A of FIG. 5.
FIG. 8 is a bottom view of a gas venting channel of FIG. 5.
FIG. 9 is a plan view of a gas venting channel of FIG. 5.
FIG. 10 is a diagram showing a first opening of a module housing according to an embodiment of the present disclosure.
FIG. 11 is an enlarged diagram of a gas outlet of a battery module according to an embodiment of the present disclosure.
FIG. 12 is a diagram showing the battery module of FIG. 10 connected to a right side frame of a pack case.
FIG. 13 is a partial cross-sectional view of a battery pack illustrating a gas venting path between a battery module and a pack case according to an embodiment of the present disclosure.
FIG. 14 is an enlarged diagram of section B in FIG. 13.
FIG. 15 is an enlarged diagram of section C in FIG. 13.
FIG. 16 is an enlarged diagram of a gas outlet of a battery module according to another embodiment of the present disclosure.
FIG. 17 is a diagram showing the battery module of FIG. 16 connected to a right side frame of a pack case.
FIG. 18 is a cross-sectional view of FIG. 17, taken along the line D-D'.

### BEST MODE

Hereinafter, the exemplary embodiment of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

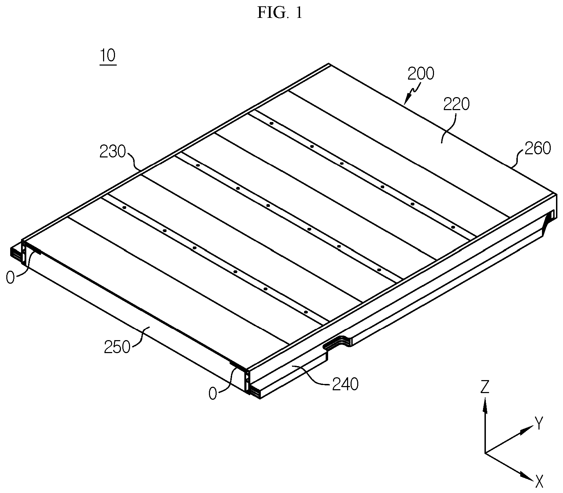

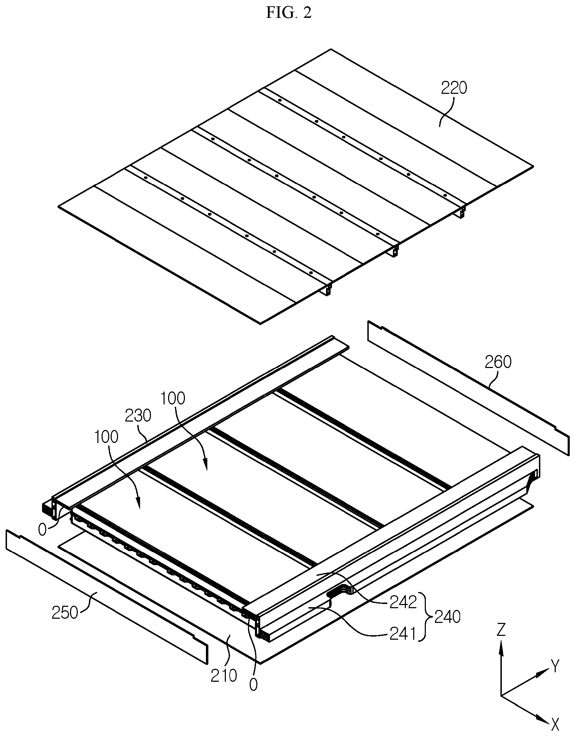

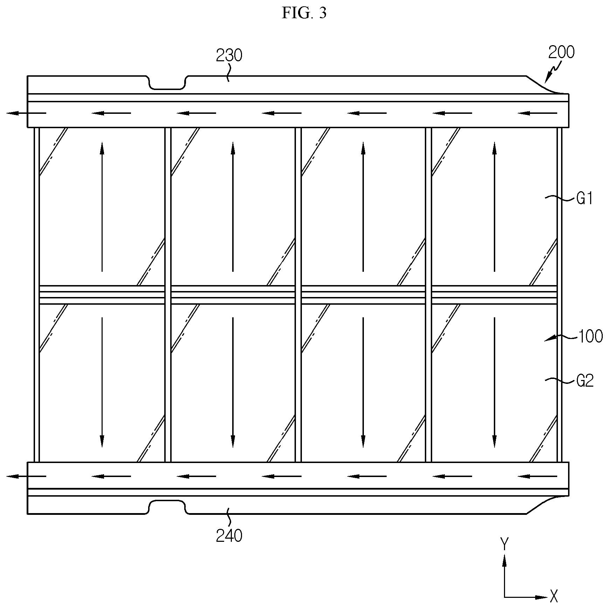

FIG. 1 is a schematic perspective view of a battery pack according to an embodiment of the present disclosure, FIG. 2 is a partial exploded perspective view of the battery pack of FIG. 1, and FIG. 3 is a conceptual diagram of a gas venting path of the battery pack of FIG. 1.

As shown in FIGS. 1 and 2, the battery pack 10 according to an embodiment of the present disclosure includes a plurality of battery modules 100, and a pack case 200 accommodating the plurality of battery modules 100, wherein two upper ends of each battery module 100 are connected to pack frames 230, 240 with a hollow structure for gas venting when gas is generated from each battery module 100.

As described below in detail, the battery pack 10 of the present disclosure is designed to allow gas generated from each battery module 100 out through the inside of the pack frames connected to each battery module 100 as shown in FIG. 3. When high temperature gas is generated from any battery module 100, the battery pack 10 allows the gas out while preventing the spread of the gas to the other battery module 100 within the pack case 200, so there is a very low likelihood that an additional event will occur to the other battery modules 100.

Hereinafter, the battery module 100 and the pack case 200 of the present disclosure for implementing the gas venting path will be described in detail.

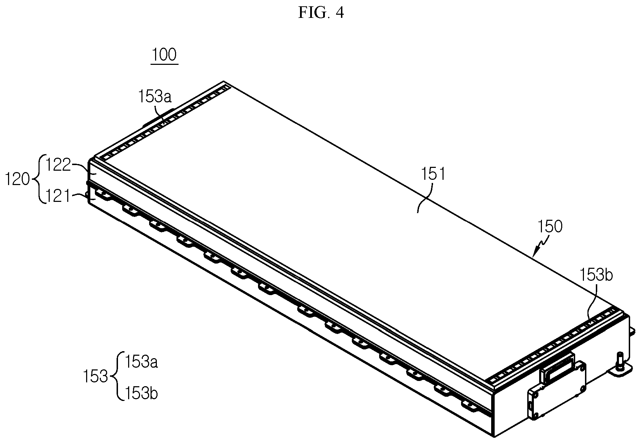

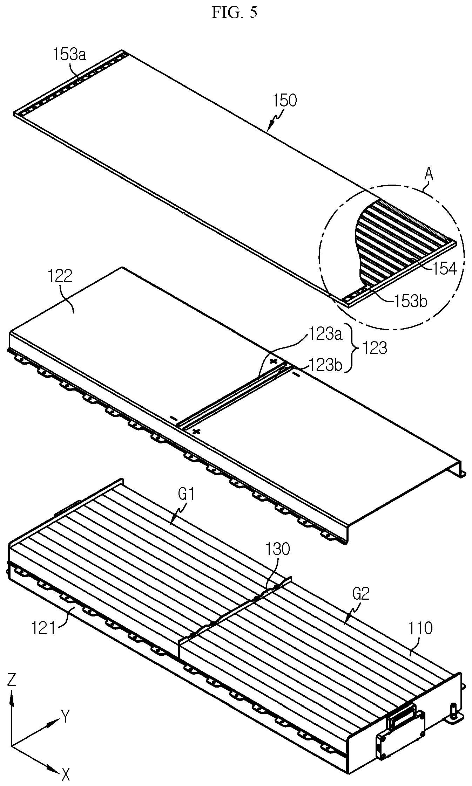

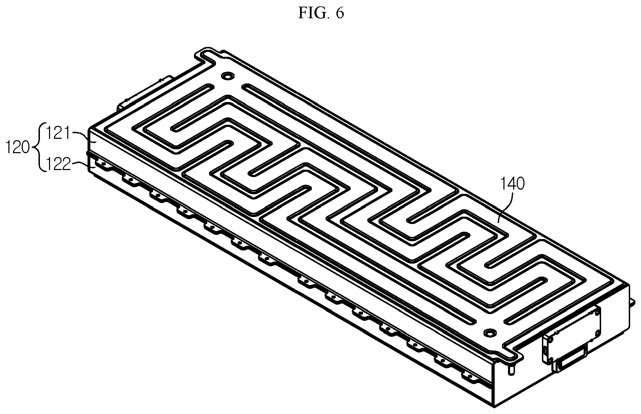

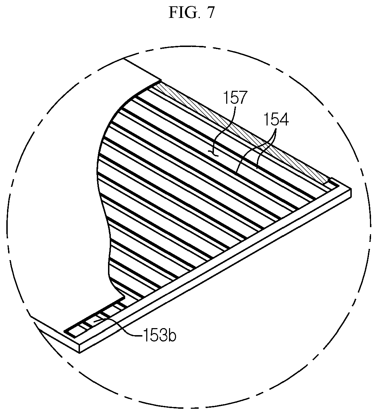

FIG. 4 is a perspective view of the battery module 100 according to an embodiment of the present disclosure, FIG. 5 is an exploded perspective view of the main parts of the battery module 100 of FIG. 4, FIG. 6 is a diagram showing the bottom of the battery module of FIG. 4, and FIG. 7 is a partial cutaway perspective view of the gas venting channel in section A of FIG. 5.

As shown in these drawings, the battery module 100 according to an embodiment of the present disclosure includes a plurality of battery cells 110, a module housing 120, a firewall 130, a heat sink 140 and a gas venting channel 150.

The battery cell 110 may include a pouch-type battery cell 110 that has high energy density and is easy to stack. As shown in FIG. 5, the pouch-type battery cells 110 may be stacked in the horizontal direction (Y axis direction) upright in the vertical direction (Z axis direction) to form a cell stack. As opposed to this embodiment, the battery module 100 may include prismatic battery cells 110 of a rectangular prism shape or cylindrical battery cells 110.

The module housing 120 is a component used to receive the plurality of battery cells 110, and may be formed with a hermetically sealed structure using a material having high mechanical strength to protect the plurality of battery cells 110 from external physical and chemical factors. The module housing 120 may include a lower housing 121 to cover the lower parts of the battery cells 110 and an upper housing 122 to cover the upper parts of the battery cells 110. The upper housing 122 and the lower housing 121 may be in the shape of an approximately U-shaped plate and coupled to each other by bolting and/or welding.

In most cases, the conventional battery module (not shown) includes one cell stack received in one module housing, while the battery module 100 of this embodiment includes a plurality of cell stacks received in one module housing 120.

As shown in FIG. 5, the battery cells 110 are divided into first group battery cells G1 that form one cell stack and second group battery cells G2 that form the other cell stack, and the first group battery cells G1 and the second group battery cells G2 are received in the module housing 120 with the firewall 130 interposed between.

The first group battery cells G1 are positioned in one space of the lower housing 121 divided by the firewall 130 and the second group battery cells G2 are positioned in the other space of the lower housing 121. Each of the first group battery cells G1 and the second group battery cells G2 positioned as described above may be received in each of the two hermetically sealed spaces surrounded by the upper housing 122, the lower housing 121 and the firewall 130, with the upper parts covered with the upper housing 122.

Here, the firewall 130 refers to a plate-shaped structure that divides the inner space of the module housing 120 into two physically separated spaces. The firewall 130 may be made of, for example, a fire-resistant material or a stiff material, and may have a sheet of fire-resistant material (for example, mica) attached to two surfaces. The firewall 130 may block heat transfer between the first group battery cells G1 and the second group battery cells G2, and prevent the module housing 120 from sagging in the middle since the top and bottom are connected to the center of the upper housing 122 and the lower housing 121, respectively.

Although not shown, for example, the upper housing 122 may have an opening that is open at a part of the central side area. The opening may be used to install a connection means for electrically connecting the first group battery cells G1 to the second group battery cells G2. The connection means may include a metal rod-shaped busbar, and after the connection means is installed, the opening may be sealed up.

One battery module 100 according to this embodiment may have, for example, the capacity equivalent to two battery modules 100, each including one cell stack received in one module housing 120, in a more compact volume. Furthermore, when the battery pack 10 is fabricated using the battery modules 100 according to this embodiment, it may be advantageous in reducing the left-right width (X axis direction) of the pack case 200.

The heat sink 140 may be at the bottom of the module housing 120, in other words, on the lower surface of the lower housing 121 as shown in FIG. 6. Here, the heat sink 140 refers to a cooling component that absorbs heat by direct contact with the battery cells 110. The heat sink 140 may be provided in the form of an aluminum plate having a flow channel inside, and as shown in this embodiment, may be incorporated into the lower housing 121 or may be attached to the bottom of the lower housing 121 with a heat transfer material on the contact surface between the heat sink 140 and the lower housing 121.

The gas venting channel 150 is used to allow venting gas inside the battery module 100 out, and one side may be in communication with the inside of the module housing 120 and the other side may be in communication with the atmosphere. The gas venting channel 150 may be attached to the outer side of the module housing 120 or may be integrally formed with the module housing 120.

The gas venting channel 150 of this embodiment may have a hollow flat box shape with a size approximately corresponding to the upper surface of the upper housing 122, and may be attached to the top of the module housing 120. The gas venting channel 150 is preferably made of a fire-resistant material to prevent deformation caused by high temperature gas or high temperature spark.

More specifically, referring to FIGS. 5 and 7 to 9, the gas venting channel 150 includes a duct 151 with a hollow structure, a gas inlet 152 that corresponds to a hole through which gas enters the duct 151, and a gas outlet 153 that corresponds to a hole through which gas exits the duct 151.

The duct 151 has a length and width corresponding to the length and width of the upper surface of the module housing 120 and is hollow to allow gas to flow inside. Additionally, the duct 151 may include a plurality of partitions 154 spaced apart from each other in the widthwise direction and extended in the lengthwise direction to divide the inner space of the duct 151.

For example, as shown in FIG. 7, the inside of the duct 151 is divided by the partitions 154, and a narrow passage 157 is between the partitions 154. A plurality of narrow passages 157 may be effective in increasing the gas movement speed. Additionally, the narrow passages 157 may be effective in restricting the movement of high temperature spark or flame. Additionally, a metal mesh (not shown) may be placed in the narrow passages 157 or the gas inlet 152 to additionally restrict the movement of high temperature spark or flame.

The gas inlet 152 may be provided on the lower surface of the duct 151 and configured to match a first opening 123 provided on top of the module housing 120.

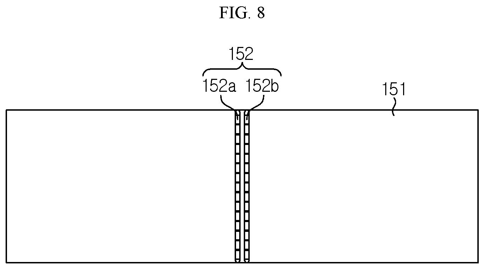

More specifically, as shown in FIG. 8, the gas inlet 152 is a long hole along the widthwise direction in the central area of the lower surface of the duct 151, and includes a first gas inlet 152a and a second gas inlet 152b spaced a predetermined distance apart from each other.

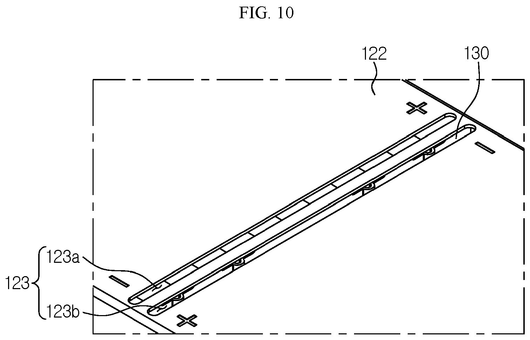

As shown in FIG. 10, the first opening 123 of the module housing 120 includes an opening 123a on the left top side of the module housing 120 and an opening 123b on the right top side of the module housing 120 with respect to the firewall 130 within the module housing 120.

When the gas venting channel 150 is attached to the module housing 120, the first gas inlet 152a matches the opening 123a, and the second gas inlet 152b matches the 1_2 opening 123b.

Accordingly, gas and high temperature spark generated from the first group battery cells G1 may enter the duct 151 through the opening 123a and the first gas inlet 152a. In this instance, since the vertical top of the first gas inlet 152a is closed, gas entering the first gas inlet 152a through the opening 123a may move in the horizontal direction, but high temperature spark or flame may move back down to the module housing 120 or move less in the horizontal direction.

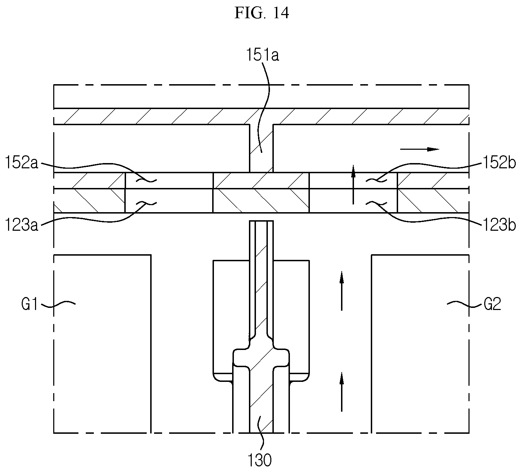

Additionally, the firewall 130 blocks the transfer of heat, gas and high temperature spark generated from the first group battery cells G1 to the second group battery cells G2 and a barrier 151a between the first gas inlet 152a and the second gas inlet 152b blocks the movement of heat, gas and high temperature spark from the first group battery cells G1 to the second group battery cells G2 through the duct 151 (see FIG. 14).

The first opening 123 may be closed by a cap (not shown) made of a hot melt material (for example, rubber or plastic) that melts out by gas or high temperature spark. The cap may be configured to close the first opening 123 during normal operation to prevent impurities from entering the module housing 120, and to open the first opening 123 only when gas or high temperature spark occurs. However, the cap may be replaced with a mesh, and may be omitted where necessary.

In this embodiment, the gas outlet 153 may be provided on the upper surface of the duct 151. The gas outlet 153 may include a first gas outlet 153a and a second gas outlet 153b. The gas outlet 153 may be configured to match a suction port 244 provided in the pack frames 230,240.

For connection to the pack frames 230,240, the first gas outlet 153a is at a predetermined distance from the first gas inlet 152a in the left extension direction (-X axis direction) of the duct 151, and the second gas outlet 153b is at a predetermined distance from the second gas inlet 152b in the right extension direction (+X axis direction) of the duct 151.

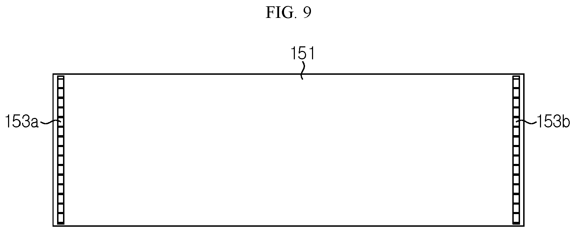

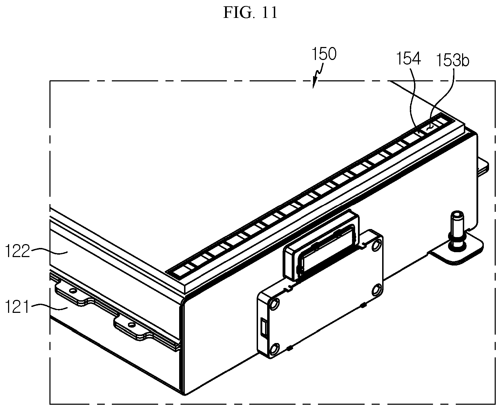

For example, as shown in FIGS. 9 and 11, the first gas outlet 153a may be a long hole extended in the widthwise direction (Y axis direction) at the left edge area of the upper surface of the duct 151, and the second gas outlet 153b may be a long hole extended in the widthwise direction at the right edge area of the upper surface of the duct 151.

The pack frame refers to the left side frame 230 that forms the left wall of the pack case 200 and the right side frame 240 that forms the right wall of the pack case 200.

The pack case 200 is a component used to receive the battery modules 100 (see FIGS. 1 and 2), and may include a base plate 210 and a top plate 220 coupled to the bottom and top of the left side frame 230 and the right side frame 240, respectively, a front cover 250 that forms the front wall of the pack case 200 and a rear cover 260 that forms the rear wall.

In particular, the left side frame 230 and the right side frame 240 are the key components to forming the gas venting path of the battery pack 10, and have a gas movement passage FP in communication with the gas venting channel 150. The left side frame 230 and the right side frame 240 may be formed by extrusion molding, and may have an open end on the front cover 250 side of the pack case 200 and a closed end on the rear cover 260 side. Accordingly, gas generated from each battery module 100 may be guided to exit the pack case 200 through the gas venting channel 150 and the gas movement passage FP of the left side frame 230 or the right side frame 240.

Since the left side frame 230 and the right side frame 240 have substantially the same structure, the following description is made based on the right side frame 240.

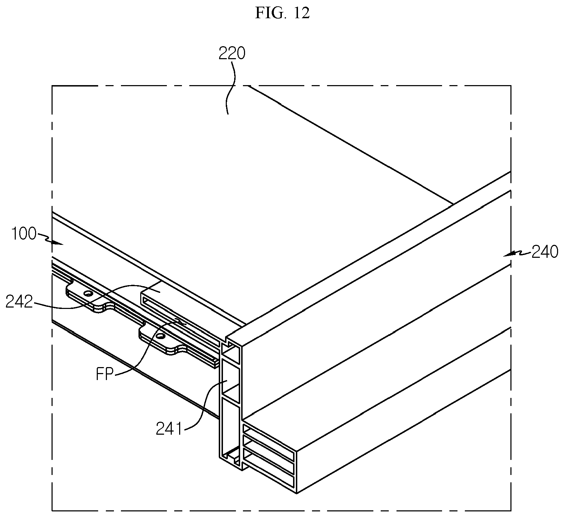

As shown in FIG. 12, the right side frame 240 may include a vertical frame part 241 extended in the heightwise direction of the battery module 100 and a module connection frame part 242 extended in the horizontal direction from the vertical frame part 241 and connected to the gas venting channel 150.

The module connection frame part 242 with a hollow structure has the gas movement passage FP therein. Additionally, the module connection frame part 242 includes a plurality of suction ports 244 arranged at a predetermined interval along the lengthwise direction (Y axis direction) and one outlet port O at one end on the front cover 250 side. Each suction port 244 may match the gas outlet 153 of the gas venting channel 150 of each battery module 100. A gasket may be applied at the contact interface between each suction port 244 and the gas outlet 153 for sealing and anti-slip. Additionally, a metal mesh may be applied to each suction port 244 to prevent high temperature spark or flame from exiting.

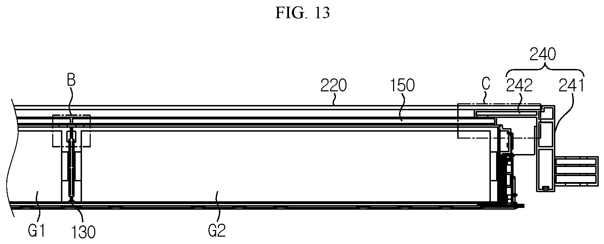

Describing with reference to FIGS. 13 to 15, the module connection frame part 242 of the right side frame 240 of this embodiment is positioned on the gas venting channel 150. In other words, one end of the module connection frame part 242 is placed on the right edge of the upper surface of the duct 151 and the suction port 244 vertically matches the second gas outlet 153b to communicate with the gas venting channel 150.

For example, gas generated from the second group battery cells G2 may enter the gas venting channel 150 through the 1_2 opening 123b, horizontally move in the right direction along the duct 151, move up from the second gas outlet 153b and enter the right side frame 240. Additionally, the gas may move to the front cover 250 of the pack case 200 along the gas movement passage FP of the right side frame 240 and exit the pack case 200 through the outlet port O of the module connection frame part 242.

On the other hand, high temperature spark or flame generated from the second group battery cells G2 may be prevented from exiting by the vertical connection structure between the 1_2 opening 123b and the second gas inlet 152b, restrained from moving by the plurality of narrow passage structures within the duct 151, and additionally prevented from exiting by the vertical connection structure between the second gas outlet 153b and the suction port 244 and the mesh. Accordingly, it is possible to prevent high temperature spark or flame from coming out of the pack case 200, thereby significantly reducing the fire risks outside of the battery pack 10.

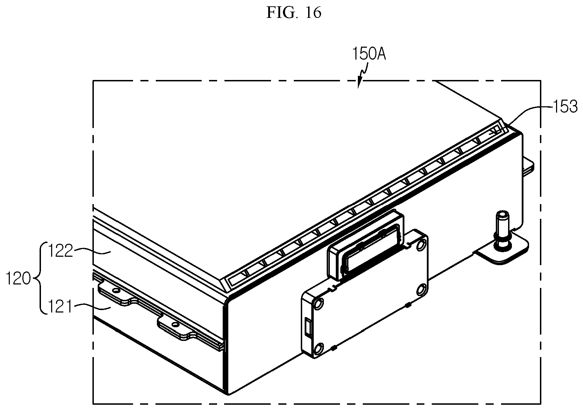

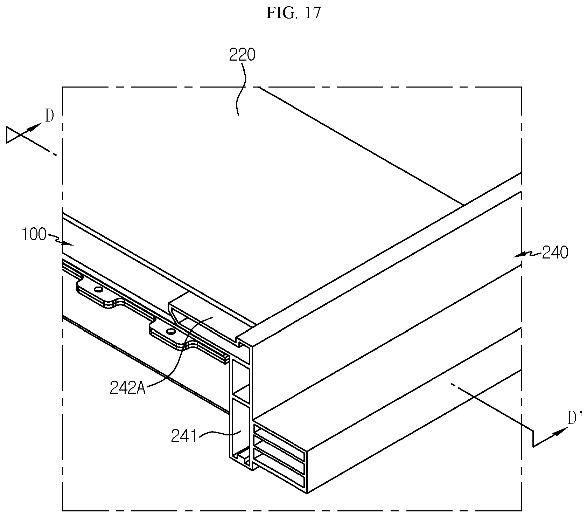

Subsequently, the battery pack 10 according to another embodiment of the present disclosure will be described with reference to FIGS. 16 to 18.

The same reference numeral as the previous embodiment indicates the same element. To avoid redundancy, the description of the same element is omitted and the following description is made based on difference(s) between this embodiment and the previous embodiment.

When compared with the previous embodiment, the battery pack 10 according to this embodiment is substantially the same as the previous embodiment except the connection structure between the gas venting channel 150A and the module connection frame part 242A.

The gas venting channel 150A according to another embodiment of the present disclosure is positioned on the module housing 120, and the module connection frame part 242A is positioned on the side of the gas venting channel 150A and configured to communicate with the gas venting channel 150A.

Specifically, the gas venting channel 150A of this embodiment may be in the shape of an approximately flat trapezoidal box with two obliquely truncated edge areas of the duct 151. Additionally, the gas outlet 153 may be on a slope surface connecting the upper surface and the lower surface of the duct 151. Here, the slope surface of the duct 151 corresponds to the side of the gas venting channel 150A.

The module connection frame part 242A may have an obliquely truncated edge area that contacts the side of the gas venting channel 150A. Additionally, the suction port 244 of the module connection frame part 242A is on the obliquely truncated slope surface.

By the above-described structure, one end of the module connection frame part 242 is connected to the side of the gas venting channel 150A, and the gas outlet 153 and the suction port 244 are in communication with each other.

This embodiment is very advantageous in the interface dimension between the battery module 100 and the pack frames 230,240.

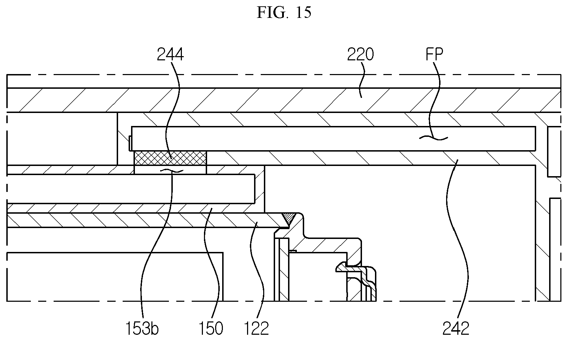

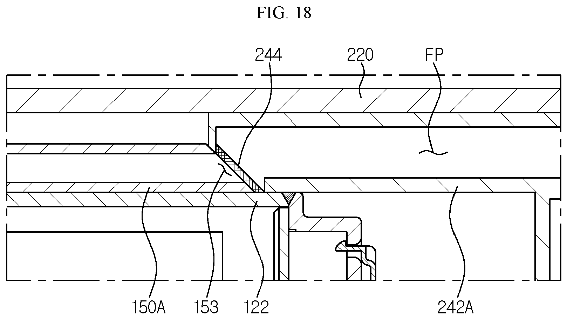

As can be seen from the comparison between FIGS. 15 and 18, compared to the previous embodiment, this embodiment is easy to reduce the height of the top plate 220 and it is possible to reduce the widthwise (X axis direction) length of the module connection frame part 242. Additionally, according to this embodiment, since the two sides of the gas venting channel 150A are supported by the module connection frame part 242 of the left side frame 230 and the module connection frame part 242 of the right side frame 240, it is possible to prevent the gas venting channel 150A from moving to the left or right from its position when external impacts or vibration are applied.

As described above, according to the configuration of the battery pack 10 according to the present disclosure, it is possible to prevent high temperature spark from exiting and allow only venting gas to flow out of the pack case 200 quickly and safely while minimizing the influence on the other battery modules 100 when venting gas or high temperature spark occurs in any battery module 100.

The battery pack according to the present disclosure may be applied to a vehicle such as an electric vehicle or a hybrid electric vehicle. That is, the vehicle according to the present disclosure may include the battery pack according to the present disclosure. The battery pack may be installed in the vehicle body frame below the vehicle seat or the trunk space, and the battery pack may be installed in the vehicle with the top plate of the pack case flipped upside down where necessary.

Meanwhile, the terms indicating directions as used herein such as upper, lower, left, right, front and rear are used for convenience of description only, and it is obvious to those skilled in the art that the term may change depending on the position of the stated element or an observer.

## Claims

1. A battery pack (10), comprising:
a plurality of battery modules (100), each including battery cells (110), a module housing (120) accommodating the battery cells (110) and a gas venting channel (150) in communication with an inside of the module housing (120); and
a pack case (200) accommodating the plurality of battery modules (100), and having a gas movement passage (FP) within a pack frame (230, 240) which forms a wall,
wherein the gas venting channel (150) of each battery module is in communication with the gas movement passage (FP),
wherein the gas venting channel (150) includes a duct (151) with a hollow structure, a gas inlet (152) provided on one side of the duct (151), and a gas outlet (153) provided on the other side of the duct (141) at a predetermined distance apart from the gas inlet (152) in an extension direction of the duct (151),
wherein the gas inlet (152) matches a first opening (123) provided in the module housing (120), and the gas outlet (153) matches a suction port (244) provided in the pack frame (230, 240), wherein the gas outlet (153) includes a first gas outlet (153a) in a left edge area of the duct (151) and a second gas outlet (153b) in a right edge area of the duct (151),
wherein the battery cells (110) include first group battery cells (G1) and second group battery cells (G2) with a firewall (130) interposed between, wherein the firewall (130) divides an inner space of the module housing (120),
wherein the first opening includes an opening (123a) on a left top side of the module housing (120) and an opening (123b) on a right top side of the module housing (120) with respect to the firewall (130),
wherein the gas inlet (152) includes a first gas inlet (152a) which matches the opening (123a) and a second gas inlet (152b) which matches the opening (123b), and
wherein a barrier (151a) is provided between the first gas inlet (152a) and the second gas inlet (152b).

2. The battery pack (10) according to claim 1, wherein the duct (151) includes a plurality of partitions (154) to divide an inner space of the duct (151).

3. The battery pack (10) according to claim 2, wherein the duct (151) includes a plurality of passages (157) extended in a lengthwise direction between the plurality of partitions (154).

4. The battery pack according to claim 1, wherein the pack frame (230, 240) which forms the wall includes a left side frame (230) which forms a left wall of the pack case (200) and a right side frame (240) which forms a right wall of the pack case (200).

5. The battery pack according to claim 4, wherein each of the left side frame (230) and the right side frame (240) includes a vertical frame part (241) extended in a heightwise direction of the battery module (100), and a module connection frame part (242) extended in a horizontal direction from the vertical frame part (241) and connected to the gas venting channel (150).

6. The battery pack (10) according to claim 5, wherein the gas movement passage (FP) is in the module connection frame part (242), and one end of the module connection frame part (242) has an open structure to communicate with outdoor air.

7. The battery pack (10) according to claim 5, wherein the gas venting channel (150) is on the module housing (120), and the module connection frame part (242) is on the gas venting channel (150) and configured to communicate with the gas venting channel (150).

8. The battery pack (10) according to claim 5, wherein the gas venting channel (150) is on the module housing (120), and the module connection frame part (242) is on a side of the gas venting channel (150) and configured to communicate with the gas venting channel (150).

9. The battery pack (10) according to claim 1, wherein the first opening (123) is closed by a cap made of a hot melt material.

10. The battery pack (10) according to claim 1, wherein the module housing (120) and the gas venting channel (150) are integrally formed.

## Patentansprüche

1. Batteriepack (10), umfassend:
eine Vielzahl von Batteriemodulen (100), die jeweils Batteriezellen (110), ein Modulgehäuse (120), das die Batteriezellen (110) aufnimmt, und einen Gasentlüftungskanal (150), der mit einer Innenseite des Modulgehäuses (120) in Verbindung steht, umfassen; und
ein Packgehäuse (200), das die Vielzahl von Batteriemodulen (100) aufnimmt und einen Gasbewegungsdurchgang (FP) innerhalb eines Packrahmens (230, 240), der eine Wand bildet, aufweist,
wobei der Gasentlüftungskanal (150) jedes Batteriemoduls mit dem Gasbewegungsdurchgang (FP) in Verbindung steht,
wobei der Gasentlüftungskanal (150) einen Kanal (151) mit einer hohlen Struktur, einen Gaseinlass (152), der auf einer Seite des Kanals (151) bereitgestellt ist, und einen Gasauslass (153), der auf der anderen Seite des Kanals (151) in einem vorbestimmten Abstand von dem Gaseinlass (152) in einer Erstreckungsrichtung des Kanals (151) bereitgestellt ist, umfasst,
wobei der Gaseinlass (152) mit einer ersten Öffnung (123), die in dem Modulgehäuse (120) bereitgestellt ist, übereinstimmt und der Gasauslass (153) mit einer Ansaugöffnung (244), die in dem Packrahmen (230, 240) bereitgestellt ist, übereinstimmt, wobei der Gasauslass (153) einen ersten Gasauslass (153a) in einem linken Randbereich des Kanals (151) und einen zweiten Gasauslass (153b) in einem rechten Randbereich des Kanals (151) umfasst,
wobei die Batteriezellen (110) Batteriezellen (G1) der ersten Gruppe und Batteriezellen (G2) der zweiten Gruppe mit einer dazwischen angeordneten Brandschutzwand (130) umfassen, wobei die Brandschutzwand (130) einen Innenraum des Modulgehäuses (120) unterteilt,
wobei die erste Öffnung (123) eine Öffnung (123a) auf einer linken Oberseite des Modulgehäuses (120) und eine Öffnung (123b) auf einer rechten Oberseite des Modulgehäuses (120) in Bezug auf die Brandschutzwand (130) umfasst,
wobei der Gaseinlass (152) einen ersten Gaseinlass (152a), der mit der Öffnung (123a) übereinstimmt, und einen zweiten Gaseinlass (152b), der mit der Öffnung (123b) übereinstimmt, umfasst, und
wobei eine Barriere (151a) zwischen dem ersten Gaseinlass (152a) und dem zweiten Gaseinlass (152b) bereitgestellt ist.

2. Batteriepack (10) nach Anspruch 1, bei dem der Kanal (151) eine Vielzahl von Trennwänden (154) umfasst, um einen Innenraum des Kanals (151) zu unterteilen.

3. Batteriepack (10) nach Anspruch 2, bei dem der Kanal (151) eine Vielzahl von Durchgängen (157) umfasst, die sich in einer Längsrichtung zwischen der Vielzahl von Trennwänden (154) erstrecken.

4. Batteriepack nach Anspruch 1, bei dem der Packrahmen (230, 240), der die Wand bildet, einen linken Seitenrahmen (230), der eine linke Wand des Packgehäuses (200) bildet, und einen rechten Seitenrahmen (240), der eine rechte Wand des Packgehäuses (200) bildet, umfasst.

5. Batteriepack nach Anspruch 4, bei dem jeder von dem linken Seitenrahmen (230) und dem rechten Seitenrahmen (240) einen vertikalen Rahmenteil (241), der sich in einer Höhenrichtung des Batteriemoduls (100) erstreckt, und einen Modulverbindungsrahmenteil (242), der sich in einer horizontalen Richtung von dem vertikalen Rahmenteil (241) erstreckt und mit dem Gasentlüftungskanal (150) verbunden ist, umfasst.

6. Batteriepack (10) nach Anspruch 5, bei dem sich der Gasbewegungsdurchgang (FP) in dem Modulverbindungsrahmenteil (242) befindet und ein Ende des Modulverbindungsrahmenteils (242) eine offene Struktur aufweist, um mit Außenluft in Verbindung zu stehen.

7. Batteriepack (10) nach Anspruch 5, bei dem sich der Gasentlüftungskanal (150) an dem Modulgehäuse (120) befindet und sich der Modulverbindungsrahmenteil (242) an dem Gasentlüftungskanal (150) befindet und konfiguriert ist, um mit dem Gasentlüftungskanal (150) in Verbindung zu stehen.

8. Batteriepack (10) nach Anspruch 5, bei dem sich der Gasentlüftungskanal (150) an dem Modulgehäuse (120) befindet und sich der Modulverbindungsrahmenteil (242) an einer Seite des Gasentlüftungskanals (150) befindet und konfiguriert ist, um mit dem Gasentlüftungskanal (150) in Verbindung zu stehen.

9. Batteriepack (10) nach Anspruch 1, bei dem die erste Öffnung (123) durch eine Kappe verschlossen ist, die aus einem Heißschmelzmaterial hergestellt ist.

10. Batteriepack (10) nach Anspruch 1, bei dem das Modulgehäuse (120) und der Gasentlüftungskanal (150) einstückig ausgebildet sind.

## Revendications

1. Bloc-batterie (10), comprenant :
une pluralité de modules de batterie (100), incluant chacun des cellules de batterie (110), un logement de module (120) recevant les cellules de batterie (110) et un canal d'évacuation de gaz (150) en communication avec un intérieur du logement de module (120) ; et
un boîtier de bloc-batterie (200) recevant la pluralité de modules de batterie (100), et ayant un passage de déplacement de gaz (FP) dans un cadre de bloc-batterie (230, 240) qui forme une paroi,
dans lequel le canal d'évacuation de gaz (150) de chaque module de batterie est en communication avec le passage de déplacement de gaz (FP),
dans lequel le canal d'évacuation de gaz (150) inclut un conduit (151) ayant une structure creuse, une entrée de gaz (152) fournie sur un côté du conduit (151), et une sortie de gaz (153) fournie sur l'autre côté du conduit (141) à une distance prédéterminée à distance de l'entrée de gaz (152) dans une direction d'extension du conduit (151),
dans lequel l'entrée de gaz (152) correspond à une première ouverture (123) fournie dans le logement de module (120), et la sortie de gaz (153) correspond à un orifice d'aspiration (244) fourni dans le cadre de bloc-batterie (230, 240), dans lequel la sortie de gaz (153) inclut une première sortie de gaz (153a) dans une zone de bordure de gauche du conduit (151) et une deuxième sortie de gaz (153b) dans une zone de bordure de droite du conduit (151),
dans lequel les cellules de batterie (110) incluent un premier groupe de cellules de batterie (G1) et un deuxième groupe de cellules de batterie (G2) ayant un pare-feu (130) interposé entre eux, dans lequel le pare-feu (130) divise un espace intérieur du logement de module (120),
dans lequel la première ouverture inclut une ouverture (123a) sur une partie supérieure de gauche du logement de module (120) et une ouverture (123b) sur une partie supérieure de droite du logement de module (120) par rapport au pare-feu (130),
dans lequel l'entrée de gaz (152) inclut une première entrée de gaz (152a) qui correspond à l'ouverture (123a) et une deuxième entrée de gaz (152b) qui correspond à l'ouverture (123b), et
dans lequel une barrière (151a) est fournie entre la première entrée de gaz (152a) et la deuxième entrée de gaz (152b).

2. Bloc-batterie (10) selon la revendication 1, dans lequel le conduit (151) inclut une pluralité de cloisons (154) pour diviser un espace intérieur du conduit (151).

3. Bloc-batterie (10) selon la revendication 2, dans lequel le conduit (151) inclut une pluralité de passages (157) étendus dans une direction de la longueur entre la pluralité de cloisons (154).

4. Bloc-batterie selon la revendication 1, dans lequel le cadre de bloc-batterie (230, 240) qui forme la paroi inclut un cadre de gauche (230) qui forme une paroi de gauche du boîtier de bloc-batterie (200) et un cadre de droite (240) qui forme une paroi de droite du boîtier de bloc-batterie (200).

5. Bloc-batterie selon la revendication 4, dans lequel le cadre de gauche (230) et le cadre de droite (240) incluent chacun une partie cadre vertical (241) étendue dans une direction de la hauteur du module de batterie (100), et une partie cadre de connexion du module (242) étendue dans une direction horizontale depuis la partie cadre vertical (241) et connectée au canal d'évacuation de gaz (150).

6. Bloc-batterie (10) selon la revendication 5, dans lequel le passage de déplacement de gaz (FP) est dans la partie cadre de connexion du module (242), et une extrémité de la partie cadre de connexion du module (242) a une structure ouverte pour communiquer avec l'air extérieur.

7. Bloc-batterie (10) selon la revendication 5, dans lequel le canal d'évacuation de gaz (150) est sur le logement de module (120), et la partie cadre de connexion du module (242) est sur le canal d'évacuation de gaz (150) et configurée pour communiquer avec le canal d'évacuation de gaz (150).

8. Bloc-batterie (10) selon la revendication 5, dans lequel le canal d'évacuation de gaz (150) est sur le logement de module (120), et la partie cadre de connexion du module (242) est sur un côté du canal d'évacuation de gaz (150) et configurée pour communiquer avec le canal d'évacuation de gaz (150).

9. Bloc-batterie (10) selon la revendication 1, dans lequel la première ouverture (123) est fermée par un capuchon constitué d'un matériau thermofusible.

10. Bloc-batterie (10) selon la revendication 1, dans lequel le logement de module (120) et le canal d'évacuation de gaz (150) sont formés d'un seul tenant.
